# EUROPEAN PATENT APPLICATION

(11) **EP 4 572 495 A1**
(43) Date of publication of application: **18.06.2025**
(21) Application number: 23852973.9
(22) Date of filing: 09.08.2023
(51) Int. Cl.: H04W 72/23, H04W 72/12, H04W 76/28, H04W 52/02

(54) **SIGNAL TRANSMISSION AND RECEPTION METHOD FOR WIRELESS COMMUNICATION AND APPARATUS THEREFOR**

(30) Priority: 11.08.2022 KR 20220100600
(71) Applicant: LG Electronics Inc., Yeongdeungpo-gu Seoul 07336 (KR)
(72) Inventor: LEE, Sunghoon, Seoul 06772 (KR); LEE, Youngdae, Seoul 06772 (KR); KIM, Jaehyung, Seoul 06772 (KR); YANG, Suckchel, Seoul 06772 (KR); BAE, Duckhyun, Seoul 06772 (KR)
(74) Representative: Plasseraud IP
(86) International application number: PCT/KR2023/011731
(87) International publication number: WO 2024/035102

(57) **Abstract**

A method by which a terminal receives a signal in a wireless communication system, according to an embodiment, comprises: receiving a discontinuous reception (DRX) configuration and a semi-persistent scheduling (SPS) configuration; and receiving an SPS physical downlink shared channel (PDSCH) that is based on the SPS configuration, wherein the SPS PDSCH may include eXtended reality (XR) traffic, and the SPS configuration may switch to an inactive pending state in a DRX off-duration of each DRX cycle that is based on the DRX configuration.

## Description

### [Technical Field]

The present disclosure relates to wireless communication, and more particularly, to a method of transmitting or receiving an uplink/downlink signal in a wireless communication system and apparatus therefor.

### [Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### [Disclosure]

### [Technical Problem]

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

### [Technical Solution]

In one aspect, a method of receiving a signal by a user equipment (UE) in a wireless communication system may include receiving a discontinuous reception (DRX) configuration and a semi-persistent scheduling (SPS) configuration, and receiving an SPS physical downlink shared channel (PDSCH) based on the SPS configuration. The SPS PDSCH may include eXtended Reality (XR) traffic, and the SPS configuration may switch to an inactive pending state in a DRX off-duration of each DRX cycle based on the DRX configuration.

Based on completion of the reception of the XR traffic or transmission of hybrid automatic repeat request (HARQ)-acknowledgement (ACK) for the XR traffic, the SPS configuration may switch to the inactive pending state.

Based on the that SPS configuration is for receiving the XR traffic, the SPS configuration may switch to the inactive pending state during each DRX off-duration.

Based on that downlink control information (DCI) including information related to the SPS configuration is detected after the SPS PDSCH, the SPS configuration may switch to the inactive pending state.

The UE may maintain the SPS configuration switched to the inactive pending state as scheduling information that can be re-activated.

The SPS configuration may be activated or re-activated based on a wake-up signal (WUS).

The SPS configuration switched to the inactive pending state may be re-activated in a next DRX on-duration.

The UE may monitor downlink control information (DCI) for activation or re-activation of the SPS configuration in the DRX on-duration based on the DRX configuration.

In another aspect, a computer-readable recording medium storing instructions for performing the above-described method may be provided.

In another aspect, a UE for performing the above- described method may be provided.

In another aspect, a device for controlling the UE for performing the above-described method may be provided.

In another aspect, a method of transmitting a signal by a base station in a wireless communication system may include transmitting a discontinuous reception (DRX) configuration and a semi-persistent scheduling (SPS) configuration, and transmitting an SPS physical downlink shared channel (PDSCH) based on the SPS configuration. The SPS PDSCH may include eXtended Reality (XR) traffic, and the SPS configuration may switch to an inactive pending state in a DRX off-duration of each DRX cycle based on the DRX configuration.

In another aspect, a base station for performing the above- described method may be provided.

### [Advantageous Effects]

According to an embodiment of the present disclosure, signal transmission and reception can be performed more accurately and efficiently in a wireless communication system.

The effects of present disclosure are not limited to what has been particularly described hereinabove, and other effects that the present disclosure could achieve will be more clearly understood from the following detailed description.

### [Description of Drawings]

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates a random access procedure.
FIG. 5 illustrates an example of physical channel mapping.
FIG. 6 is a diagram illustrating issues that arise when DRX and SPS are configured together.
FIG. 7 is a diagram illustrating the Type 1 SPS operation of a UE for which DRX and SPS are configured, according to an embodiment.
FIG. 8 is a diagram illustrating the Type 2 SPS operation of a UE for which DRX and SPS are configured, according to an embodiment.
FIG. 9 is a diagram illustrating a flow of a method of receiving a signal by a UE according to one embodiment.
FIG. 10 is a diagram illustrating a flow of a method of transmitting a signal by a BS according to one embodiment.
FIG. 11 is a diagram illustrating a flow of a method of transmitting and receiving signals over a network according to one embodiment.
FIGS. 12 and 13 illustrate a communication system 1 and wireless devices applied to the present disclosure.

### [Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto. LTE refers to technologies after 3GPP TS 36.xxx Release 8. Specifically, LTE technologies after 3GPP TS 36.xxx Release 10 are referred to as LTE-A, and LTE technologies after 3GPP TS 36.xxx Release 13 are referred to as LTE-A pro. 3GPP NR refers to technologies after TS 38.xxx Release 15. LTE/NR may be referred to as 3GPP systems. In this document, "xxx" represents the detail number of a specification. LTE/NR may be collectively referred to as 3GPP systems.

Details of the background, terminology, abbreviations, etc. used herein may be found in documents published before the present disclosure. For example, the present disclosure may be supported by the following documents:

### 3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

### Technical terms used in this document

- UE : User Equipment
- URLLC : Ultra-Reliable Low-Latency Communication
- eMBB : enhanced Mobile Broadband
- SSB : Synchronisation Signal Block
- FR1 : Frequency Range 1, which refers to the frequency range below 6 GHz (e.g., 450 MHz to 6000 MHz).
- FR2 : Frequency Range 2, which refers to the millimeter wave (mmWave) region above 24 GHz (e.g., 24250 MHz to 52600 MHz).
- BW : Bandwidth
- BWP : Bandwidth Part
- RNTI : Radio Network Temporary Identifier
- PDSCH : Physical Downlink Shared Channel
- PUSCH : Physical Uplink Shared Channel
- PDCCH : Physical Downlink Control Channel
- MO : Monitoring Occasion
- XR : An abbreviation for eXtended Reality, referring to virtual reality (VR), augmented reality (AR), and mixed reality (MR).
- DRX : Discontinuous Reception

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, proposals and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, proposals and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

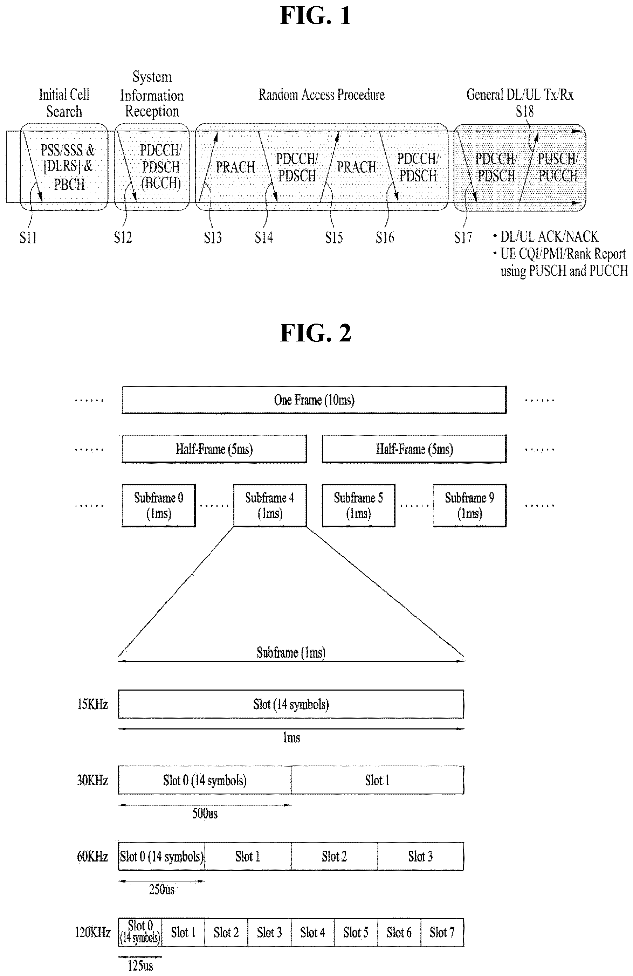

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The SSB is composed of four consecutive OFDM symbols, each carrying the PSS, the PBCH, the SSS/PBCH, or the PBCH. Each of the PSS and the SSS includes one OFDM symbol by 127 subcarriers, and the PBCH includes three OFDM symbols by 576 subcarriers. The PBCH is encoded/decoded based on Polar codes, and modulation/demodulation is performed thereon according to quadrature phase shift keying (QPSK). The PBCH in the OFDM symbol consists of data resource elements (REs) to which a complex modulation value of the PBCH is mapped, and demodulation reference signal (DMRS) REs to which a DMRS for the PBCH is mapped. Three DMRS REs are configured for each RB in the OFDM symbol, and three data REs configured between DMRS REs.

The PSS may be used in detecting a cell ID within a cell ID group, and the SSS may be used in detecting a cell ID group. The PBCH may be used in detecting an SSB (time) index and a half-frame. There are 336 cell ID groups, and each cell ID group includes three cell IDs. Thus, there are a total of 1008 cell IDs.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.
- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half-frame indication information. For example, when the UE detects the PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that an SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

System information (SI) is divided into a master information block (MIB) and a plurality of system information blocks (SIBs). The SI except for the MIB may be referred to as remaining minimum system information (RMSI). Details thereof will be described in the following.
- The MIB includes information/parameters for monitoring a PDCCH scheduling a PDSCH carrying SIB1 (SystemInformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB 1 provides information on a frequency location at which the SSB/SIB1 exists and information on a frequency range where there are no SSB/SIB1.
- SIB1 includes information related to availability and scheduling (e.g., transmission periodicity, SI-window size, etc.) of the remaining SIBs (hereinafter referred to as SIBx where x is an integer more than or equal to 2). For example, SIB1 may indicate whether SIBx is periodically broadcast or provided at the request of the UE in an on-demand manner. When SIBx is provided in an on-demand manner, SIB1 may include information necessary for the UE to send an SI request. SIB1 is transmitted over a PDSCH, and a PDCCH scheduling SIB1 is transmitted in the Type0-PDCCH common search space. That is, SIB1 is transmitted over the PDSCH indicated by the PDCCH.
- SIBx is included in the SI message and transmitted on the PDSCH. Each SI message is transmitted within a periodically occurring time window (i.e., SI-window).

The UE may perform a random access procedure (e.g., 4-step RA procedure) to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

Hereinafter, a 2-step random access procedure will be described in brief. In the 2-step random access procedure, S103/S105 may be performed in one step (where the UE performs transmission) (message A), and S104/S106 may be performed in one step (where the BS performs transmission) (message B). Message A (MsgA) may include a preamble and a payload (PUSCH payload), and the preamble and payload may be multiplexed based on time division multiplexing (TDM). In response to MsgA, message B (MsgB) may be transmitted for contention resolution, fallback indication(s), and/or backoff indication. The 2-step random access procedure may be subdivided into a contention-based random access (CBRA) procedure and a contention-free random access (CFRA) procedure. In the CFRA procedure, the BS may provide the UE with information on a preamble that the UE needs to transmit in MsgA and information on PUSCH allocation before the UE transmits MsgA.

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The MR system may support signal transmission/reception in unlicensed bands. According to regional regulations for unlicensed bands, a communication node in an unlicensed band needs to determine whether a channel is used by other communication node(s) before transmitting a signal. Specifically, the communication node may perform carrier sensing (CS) before transmitting the signal so as to check whether the other communication node(s) perform signal transmission. When it is determined that the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. When it is determined that the channel is idle, the communication node may start the signal transmission in a UCell. The sires of processes described above may be referred to as Listen-Before-Talk (LBT) or a channel access procedure (CAP). The LBT and CAP may be interchangeably used in this document.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N ^{slot}_{symb} | N ^{frame,u}ₛₗₒₜ | N ^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a slot N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^u) | N ^{slot}_{symb} | N ^{frame,u}ₛₗₒₜ | N ^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

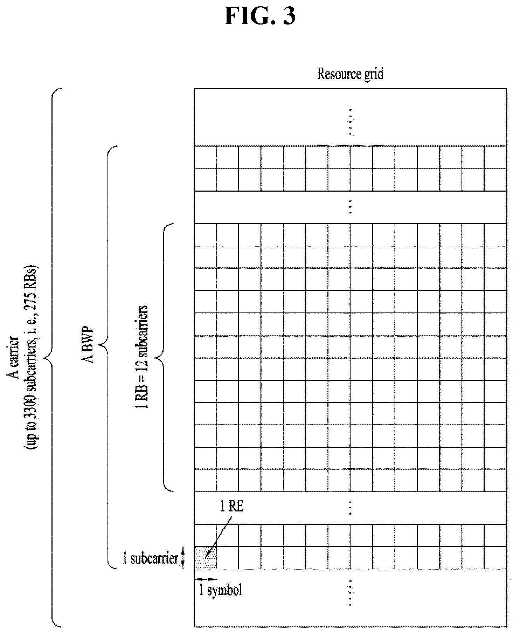

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

### Bandwidth part (BWP)

The NR system may support up to 400 MHz for each carrier. The network may instruct the UE to operate only in a partial bandwidth rather than the whole bandwidth of such a wideband carrier. The partial bandwidth is referred to as a BWP. The BWP refers to a subset of contiguous common RBs defined for a numerology in the BWP of a carrier in the frequency domain, and one numerology (e.g., SCS, CP length, slot/mini-slot duration, etc.) may be configured.

Activation/deactivation of a DL/UL BWP or BWP switching may be performed according to network signaling and/or timers (e.g., L1 signaling corresponding to a physical layer control signal, a MAC control element corresponding to a MAC layer control signal, RRC signaling, etc.). While performing initial access or before setting up an RRC connection, the UE may not receive any DL/UL BWP configurations. A DL/UL BWP that the UE assumes in this situation is referred to as an initial active DL/UL BWP.

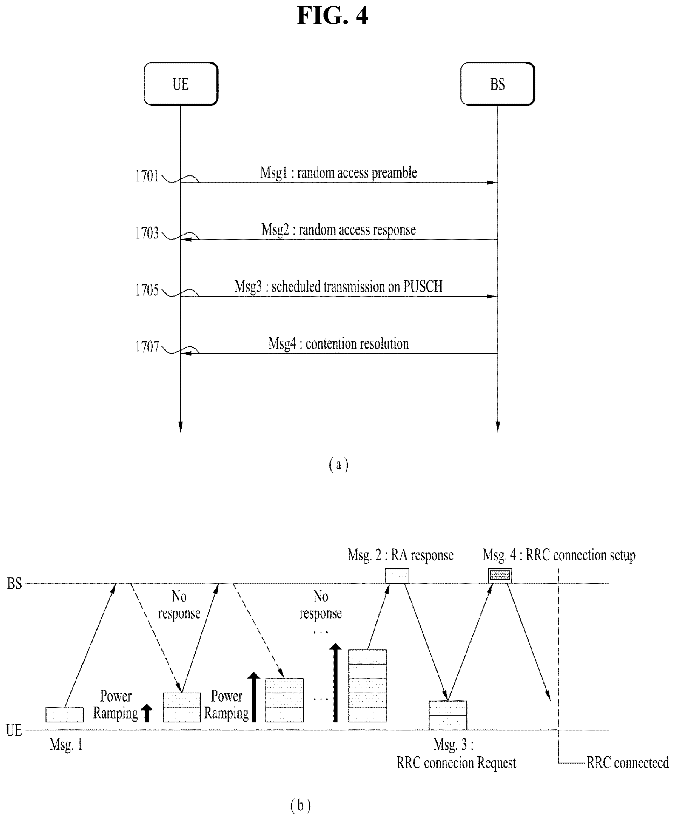

FIG. 4 illustrates an exemplary normal random access procedure. Specifically, FIG. 4 shows a contention-based random access procedure of the UE, which is performed in four steps.

First, the UE may transmit message 1 (Msg1) including a random access preamble on a PRACH (see 1701 of FIG. 4(a)).

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on a RACH time-frequency resource associated with a detected or selected SSB.

The threshold of an SSB for RACH resource association may be configured by the network, and a RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on a RACH resource associated with the selected SSB.

Upon receiving the random access preamble from the UE, the BS may transmit message 2 (Msg2) corresponding to a random access response (RAR) message to the UE (see 1703 of FIG. 4(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 4(a)). Msg3 may include an RRC connection request and a UE identifier. In response to Msg3, the network may transmit message 4 (Msg4), which may be treated as a contention resolution message on DL (see 1707 of FIG. 4(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB, and the content may be given as shown in Table 3.

**[Table 3]**

| **RAR UL grant field** | **Number of bits** |
|---|---|
| Frequency hopping flag | 1 |
| Msg3 PUSCH frequency resource allocation | 12 |
| Msg3 PUCH time resource allocation | 4 |
| Modulation and coding scheme (MCS) | 4 |
| Transmit power control (TPC) for Msg3 PUSCH | 3 |
| CSI request | 1 |

In a contention-free random access (CFRA) procedure, the CSI request field in the RAR UL grant indicates whether the terminal includes aperiodic CSI reporting in the corresponding PUSCH transmission. a subcarrier spacing for Msg3 PUSCH transmission is provided by the RRC parameter. The terminal may transmit PRACH and Msg3 PUSCH on the same uplink carrier in the same service providing cell. A UL BWP for Msg3 PUSCH transmission is indicated by SystemInformationBlock1 (SIB1).

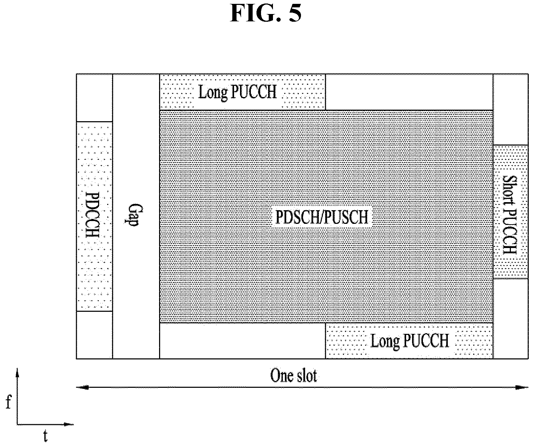

FIG. 5 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicity AndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 4 shows the characteristics of each SS.

**[Table 4]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 5 shows DCI formats transmitted on the PDCCH.

**[Table 5]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

### SPS enhancements for reception of XR traffic

In the Rel-18 NR standard, various scenarios and candidate technologies are discussed to support XR services (FS_NR_XR_enh). Since XR services typically require high data rate and low latency, and high power consumption of the UE is expected therefor, various techniques for power saving are being considered.

The traffic model and requirements for XR services are defined in TR38.838, the technical report of the Rel-17 XR study. A frame in the XR traffic model may be understood as the same as a packet received in a communication environment. In addition to this periodic traffic occurrence, jitter may occur due to a number of causes. In this context, jitter means that the actual packet reception is earlier or later than the expected packet reception. The traffic model of the XR service assumes that jitter follows a truncated Gaussian distribution. For example, when the periodic packet reception time is T, the range of actual packet reception is given as [T-4, T+4], and the probability of receiving a packet closer to time T is higher, and the probability of receiving a packet farther away from time T is lower. In this example, the jitter range may be [-4, 4], which may be the range typically assumed in a single stream DL traffic model. Therefore, in order to expect power saving effect through DRX operation in XR service, it is necessary to design the system considering jitter in addition to periodic traffic transmission and reception.

DRX operation and monitoring adaptation operation may be considered to reduce the power of UEs supporting XR services. To meet the requirement of 60fps for XR services, the introduction of non-uniform DRX cycles or non-integer DRX cycles may be considered.

In NR, the following characteristics of DRX may be used to reduce unnecessary power consumption of the UE. DRX structures for UEs in RRC_IDLE state and RRC_CONNECTED state are defined, respectively. By defining periodic intervals in which the UE may expect to receive DL signals, both DRX structures are designed to reduce unnecessary power consumption during other periods. Specifically, in the case of C-DRX (i.e., DRX applied to a UE in the RRC_CONNECTED state), the start position of the on-duration occurs periodically based on the Rel-16 standard of NR. In this case, the size of the period (i.e., DRX cycle) that may be configured may be determined based on a higher layer parameter provided by a BS to the UE.

The monitoring adaptation operation refers to adjusting (generally reducing) the number of monitoring operations the UE needs to perform. The UE may have up to 10 SS sets configured per BWP and monitors the PDCCH candidates included in the SS sets. Since the UE should perform blind decoding (BD) for the PDCCH, not knowing when and in which DCI format it will be received, PDCCH monitoring accounts for a large portion of power consumption. Monitoring adaptation means PDCCH monitoring skipping (hereinafter, skipping) and SS set group (SSSG) switching (hereinafter, switching). Skipping is defined as stopping PDCCH monitoring for the indicated duration, and switching is defined as stopping monitoring the SS sets included in the current specific SSSG and starting to monitor SS sets included in another SSSG.

In the NR standard, semi-persistent scheduling (SPS) is supported for DL transmission. SPS is a mechanism where PDSCH transmission is scheduled through an RRC message. Periodicity, modulation and coding scheme (MCS) table, and the like are configured through RRC, and SPS may be activated or released through DCI that includes a CRC scrambled with CS-RNTI. Table 6 below shows SPS-related RRC parameters, excerpted from TS38.331.

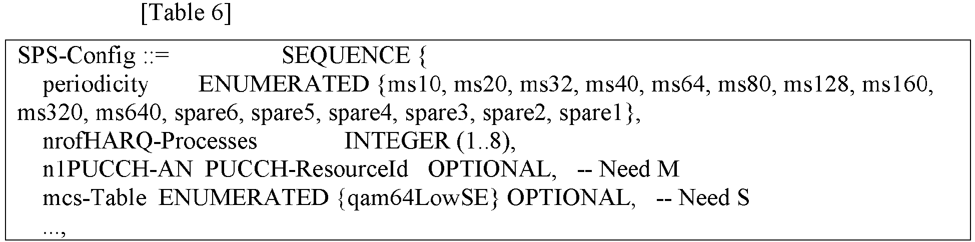

The DCI indicating the activation and release of DL SPS may have specific fields fixed to predetermined specific values, which may indicate that the indication of the DCI is valid.

SPS may be configured independently from DRX, and each of SPS and DRX may be independently related to periodic PDSCH reception by the UE. However, SPS and DRX are independently configured/used, and there is no method to use SPS and DRX together in an integrated manner. More specifically, SPS is independent of the periodic DRX on-duration. If the UE sends a NACK for retransmission of an SPS PDSCH containing a MAC PDU, the HARQ RTT timer starts, and then the retransmission timer may start. The start of the retransmission timer may serve as a condition for the start of DRX active time, and thus the UE may enter the DRX active time to receive the retransmission. However, initial data (e.g., XR traffic) received through activated SPS PDSCH that is not a retransmission is not associated with the start of the DRX active time.

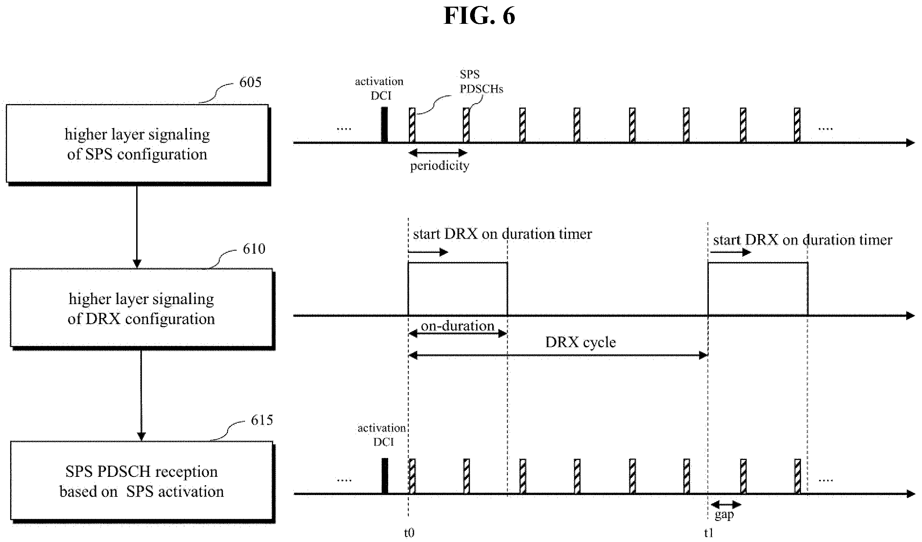

For example, FIG. 6 illustrates an issue that arises when SPS and DRX are configured together.

The UE may receive an SPS configuration (e.g., Table 6) through higher layer signaling (605). Based on the periodically configured SPS resources, the UE may receive SPS PDSCHs. For example, after receiving DCI for activation of the SPS configuration, the UE may receive SPS PDSCHs based on the periodically configured SPS resources.

The UE may receive the DRX configuration (610). Specifically, DRX configuration information is received through higher layer (e.g., RRC) signaling, and DRX ON/OFF is controlled by DRX commands at the MAC layer. DRX configuration information may include (i) a value of drx-OnDurationTimer (which defines the length of the start period of the DRX cycle), (ii) a value of drx-InactivityTimer (which defines the length of the time period during which the UE stays awake after detecting a PDCCH occasion indicating initial UL or DL data), (iii) a value of drx-HARQ-RTT-TimerDL (which defines the maximum time period until DL retransmission is received after receiving the initial DL transmission), (iv) a value of drx-HARQ-RTT-TimerUL (which defines the maximum time period until the UL retransmission grant is received after receiving the grant for initial UL transmission), (v) drx-LongCycleStartOffset (which defines the time duration and start point in time of the DRX cycle), and (vi) drx-ShortCycle (optional) (which defines the time duration of the short DRX cycle). The UE with DRX configured may reduce power consumption by receiving DL signals discontinuously. The DRX cycle includes an On Duration and an Opportunity for DRX. The DRX cycle defines the time interval at which the On Duration repeats periodically.

It is assumed that DRX configuration as well as the SPS configuration as described above provided for the UE, and the UE wakes up during the DRX on-duration to receive the periodically transmitted SPS PDSCH (615). It is also assumed that activation DCI is received such that the SPS configuration is activated at the start timing t0 of the first DRX on-duration. In this case, the UE may receive SPS PDSCH starting from the beginning of the first DRX on-duration. However, since the periodicities of SPS PDSCH and DRX are independently configured, the SPS PDSCHs in the second DRX on-duration are not time-aligned with the start of the second DRX on-duration. Thus, the SPS PDSCHs may only be received after a delay corresponding to a gap from the start of the second DRX on-duration.

To resolve this issue, the SPS may be released through DCI after the first DRX on-duration and another activation DCI may be provided to make SPS PDSCH receivable at time t1 before the second DRX on-duration starts. However, since the SPS configuration is discarded after being released, the released SPS configuration will not remain on the UE for future use, and the other SPS configuration will need to be provided through RRC. However, since RRC signaling has a relatively long delay, it is not suitable for dynamic signaling operation. Further, even when it is assumed that a new SPS configuration is provided, DCI to activate the configuration at timing t1 needs to be provided. Considering that the main advantage of the SPS configuration, semi-persistent scheduling, is to minimize DCI and signaling overhead while providing DL signals, signaling activation/release DCI every time and providing an SPS configuration every time is quite inefficient, and thus is not an appropriate solution to the aforementioned issue.

Therefore, based on the discussion above, the present disclosure proposes a method to link DRX and SPS to more efficiently receive periodic data. Specifically, SPS may be used for periodic XR packet reception in conjunction with the DRX configured for UE XR packet reception. According to this approach, the UE may reduce unnecessary PDCCH monitoring for XR packet reception, which may result in power savings.

The present disclosure proposes a method to improve SPS with DRX related operation for UEs to receive XR packets over SPS. When DRX is configured in order for a UE to support XR services, the DRX cycle may be set to match the operation and periodicity for XR packet reception. Currently, SPS in the NR standard is an operation unrelated to DRX and is performed independently, but the SPS reception operation may be linked to DRX for XR support. This may allow the UE to receive XR packets through the configured SPS resources without receiving the PDCCH for scheduling of the XR packets. In other words, the UE may use the previously configured SPS resources to receive XR packets only within the DRX active time.

The present disclosure may include the use of wake-up signals for SPS indication, definition of SPS pending, distinction of SPS types, and PDCCH skipping operation after SPS reception.

Although the XR service is proposed below as an example, the proposed method may be applied to any case where periodic transmission is scheduled. The periodic transmissions may include reception within a DRX duration or reception of SPS PDSCH.

Although the proposed methods are described below based on the XR service that requires periodic reception, the methods proposed in the present disclosure are not limited thereto. It will be apparent to those skilled in the art that the methods may be extended and applied to all signals received by the UE with a certain periodicity. Therefore, it is apparent that the proposed methods are applicable to all types of transmission and reception methods expected by the BS and the UE as long as the principle of the present disclosure is not violated, even without separate explanation. Hereafter, for simplicity, the term DRX is used as a general concept including the term C-DRX.

Although the proposed methods are described below based on the NR system, the proposed methods do not limit the transmission and reception forms of NR unless otherwise specified. Also, although examples are described herein based on the characteristics and structure of the C-DRX UE to explain the principle of the present disclosure, the proposed methods are not limited to the support of the C-DRX UE unless otherwise specified.

The distinction of each method or option in the following description is intended to clarify the description and shall not be construed to mean that each must be practiced as an independent invention. For example, each of the methods/options described below may be practiced separately, but at least some of them may also be practiced in combination as long as they do not conflict with each other.

### [Method 11 SPS activation through wake-up indication

DCI for activating SPS configured by RRC includes fields such as the new data indicator, DFI flag, time domain resource assignment, and PDSCH-to-HARQ feedback timing indicator, which have special values, and may include validation as shown in Table 7, excerpted from TS38.213. The HARQ process number may be excluded from the validation and be used to indicate the SPS index when it is an indication related to multi-SPS.

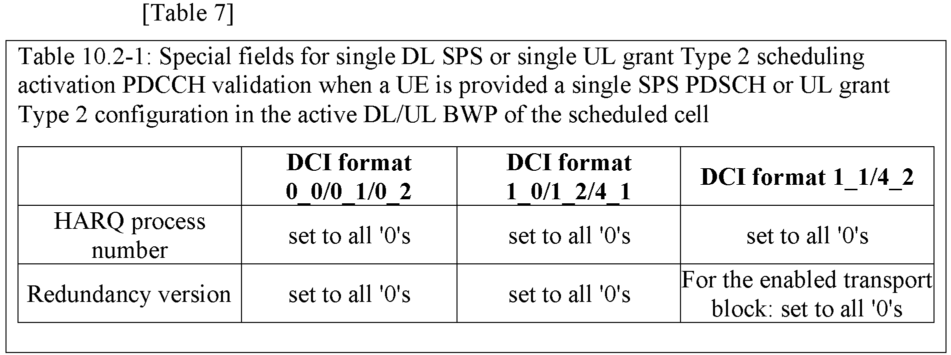

### [Method 1-1] SPS activation through wake-up signal

The UE may receive a wake-up signal (WUS), which may be indicated by DCI format 2_6, in a slot during a certain period before the DRX Active Time of a given cycle. The WUS includes a 1-bit wake-up indication that may inform the UE whether it should wake up in the next DRX cycle.

Proposed herein is a method to use the 1-bit wake-up indication in the WUS for SPS activation. When DRX has been configured for the UE to support XR services, it may not be necessary to indicate whether to wake up in the next DRX cycle because XR packets should always be received with a constant periodicity. In other words, to always receive XR packets with a constant periodicity, it may be desirable for the UE to wake up according to a determined DRX cycle. Therefore, the existing 1-bit wake-up indication may be utilized for SPS activation.

Alternatively, the wake-up indication and SPS activation may be combined. When the UE wakes up in the next DRX, SPS may be automatically activated.

To independently support SPS activation and wake-up indication, bits may be added to the WUS. The SPS activation status and wake-up status may be indicated independently with 1 bit each, or a 2-bit state or table may be configured to indicate the same. For example, the following 2-bit states may be considered:
- 00: SPS not activated, DRX not started
- 01: SPS only
- 10: PDCCH only (DRX on)
- 11: SPS activation and DRX on

Different wake-up signals than the existing ones may be considered. Four states, as in the previous example, may be indicated in the form of a sequence.

Without adding a new bit field to DCI format 2_6, the 1-bit wake-up indication may be interpreted differently. The new indications for the 1-bit wake-up indication are given below:
0: Delay the start time of drx-onDurationTimer by a set offset.
1: Activate SPS while starting drx-onDurationTimer.

When the existing wake-up indication indicates 0, the UE does not wake up in the next DRX cycle. However, as described above, XR packets should be received with a certain periodicity, and therefore this indication may be changed. 0 may be set to indicate delaying the start time of the drx-onDurationTimer by a set offset, which may be intended to consider the jitter, which is the characteristic of XR services. or to correct a non-uniform cycle. After the offset is indicated through the WUS, the UE may start the drx-onDurationTimer according to the offset. Alternatively, it may receive the WUS again on an occasion when the UE may monitor the WUS after the offset.

### [Method 1-2] Defining SPS pending

In the case of SPS activation in Method 1-1 proposed above, the scheduling information in the DCI that includes the CRC scrambled by the CS-RNTI is not included. Method 1-2 proposes a method to configure SPS resources that may be used when SPS is activated through a wake-up signal.

In this embodiment, a new state or indication for SPS is proposed. SPS is composed of activation including scheduling and release that directs not to use scheduled resources anymore, which are performed through DCI. The DCI that releases SPS includes fields such as the new data indicator, DFI flag, time domain resource assignment (TDRA), and PDSCH-to-HARQ feedback timing indicator, which have special values, and may include validation as shown in Table 8, excerpted from TS38.213. The HARQ process number may be excluded from the validation and be used to indicate the SPS index when it is an indication related to multi-SPS.

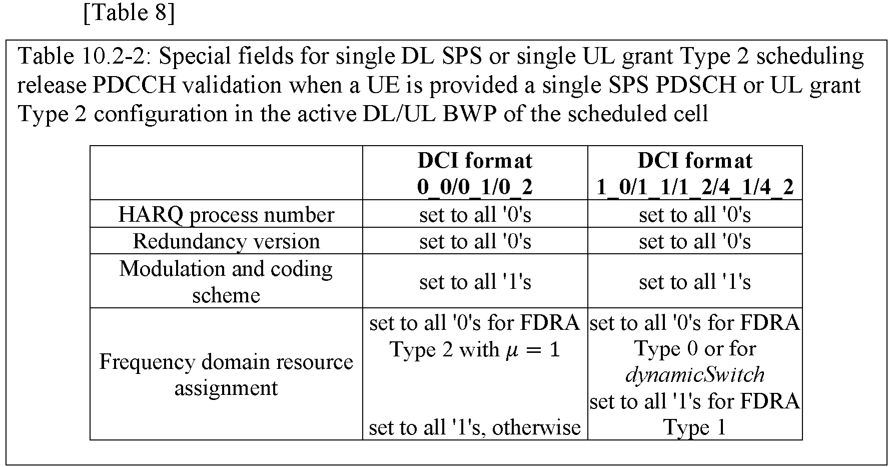

Proposed below is pending (or weak release) during which the configured SPS resource is not used until it is reactivated, but the scheduling information is retained. When pending is indicated to the UE for the previously activated SPS, the resources originally used for scheduling may be used for other transmissions, but the information about the resources is retained. Then, in the SPS in the pending state, the resources prior to pending may be used to receive PDSCH even when activation without scheduling (e.g., Method 1-1) is indicated.

The following methods may be considered to indicate SPS pending.

### 1) Utilizing some of the fields for SPS release validation

The indication of SPS pending is similar to the existing indication of SPS release, but may utilize only some of the fields used for validation.

For example, the fields used for the existing SPS release validation may be used in the same way, except for the time domain resource assignment (TDRA) and frequency domain resource assignment (FDRA). By including TDRA and FDRA in the SPS pending indication, it may be indicated that the resources in the time domain and frequency domain are pending. Similarly, the HARQ process number may be used to indicate the SPS index for multi-SPS. Alternatively, the same fields as SPS activation may be used for the validation of SPS pending.

### 2) SPS pending after SPS activation if certain conditions are met

SPS pending may be performed automatically without an explicit indication when certain conditions are met. For example, when a specific SPS index is configured to receive XR packets and reception of XR packets is completed within a packet delay budget (PDB) margin, the SPS may be automatically pending. Here, the PDB margin refers to the time limit within which the packet must be successfully transmitted to the UE. As another example of a condition, when the HARQ-ACK for the last transport block (TB) of the XR packet is transmitted/received, the SPS may be automatically pending. In this case, the HARQ-ACK for the last TB may replace the SPS pending indication.

### [Method 1-3] UE and BS operations for activating pending SPS with WUS

Based on the proposals from Method 1-1 and Method 1-2, operations of the UE and BS are proposed. In the case of DRX for XR packet reception (with a periodicity set to match 60fps or 120fps of the XR service), it may be advantageous for ps-WakeUp to always be set to true. If ps-WakeUp is true, the UE will wake up in the next DRX even when it does not receive a WUS.

The UE may operate according to C-DRX and SPS configured independently therefor. The periodicity of C-DRX is set for the purpose of receiving XR packets, and specific index(es) may be set for SPS for the purpose of receiving XR packets. The initial SPS configuration may be performed through RRC configuration and general SPS activation indication. After the subsequently configured SPS is pending, the UE may start the DRX Active Time. The UE may receive indications of the start of the DRX Active Time and SPS activation through a WUS (Method 1-1). Once the UE has completed XR packet reception, the SPS may be pending (Method 1-2). Then, until the end of the DRX Active Time, the UE may receive PDSCH other than XR packets through dynamic scheduling of the BS (scheduling through DCI).

Through the proposed operation, the UE may receive PDSCH (XR packet) in the activated SPS that overlaps in time with the DRX Active Time.

The reference point for determining the position of the SPS occasion may be adjusted to match DRX. For example, although not actually indicated, the time when the SPS activation DCI is received may be considered as the first symbol of the slot in which the drx-onDurationTimer starts. This scheme may be used to determine the occasion of SPS activated in the current SPS, based the TDRA of the previously pending SPS. The occasion of the SPS may be determined by calculating the TDRA based on the first symbol of the slot in which the drx-onDurationTimer starts. For example, SPS that was activated in the previous DRX and later became pending may be activated in the current DRX through a WUS. Since activation through the WUS does not include TDRA, the position of the SPS occasion may be determined by applying the TDRA from the previous DRX activation from the start point of the current DRX.

Alternatively, it may be dynamically indicated through the WUS or activation DCI. The SPS occasion may be calculated and determined based on the reception time of XR traffic rather than DRX.

When setting the SPS-configIndex, it may be pre-configured through a higher layer parameter whether the position of the SPS occasion can be modified according to DRX. If not adjusted according to DRX, occasions may be determined according to the periodicity of the SPS-configIndex based on the first activated SPS occasion. Thereafter, the pending SPS may have a determined occasion, but the PDSCH may not be transmitted using time and frequency domain resources. The BS may use these resources for other purposes.

When setting the SPS-configIndex, it may be pre-configured through a higher layer parameter whether the position of the SPS occasion can be modified according to DRX. The SPS-configIndex may be set to be associated with the DRX index. For example, a DRX index associated with the SPS-configIndex may be configured to allow the position of the occasion to be modified according to the DRX of that index.

Multiple flows with different periodicities may be considered to support XR services. To this end, even when multiple SPSs with different periodicities are configured, they may be considered as a group and controlled together to support the same XR service. For example, among the configured SPSs, indexes whose purpose is to support XR services as an XR dedicated group. Within this group, the positions of the SPS occasions may be adjusted together.

If the UE does not receive a WUS, the operation may be distinguished based on the activation of the SPS. This may only apply if previously pending SPS is present.
**1) If the UE does not receive the WUS, the SPS is activated at the start of DRX Active Time.**

If the UE does not receive the WUS but starts the DRX Active Time, the previously pending SPS may be automatically activated. The previously pending SPS may be for XR packet reception and may have been pending in the previous DRX Active Time. Since the pending SPS is present, both the UE and the BS know the time and frequency domain resources for transmitting and receiving PDSCH. Therefore, by activating the pending SPS at the start of the DRX Active Time, PDSCH reception through those resources may be expected.

Therefore, the UE will monitor PDCCH and perform PDSCH reception through SPS as it starts the DRX Active Time.

The BS may indicate dynamic scheduling through DCI that includes a CRC scrambled with C-RNTI or perform scheduling using activated SPS resources for transmission of XR packets.

If the UE does not receive the expected SPS PDSCH (possibly because the WUS does not indicate SPS activation or it is a false alarm), it may hold the SPS in the pending state or release the SPS. Alternatively, it may not expect the reception through the SPS until the next DRX Active Time. This operation may be performed based on a timer. In this case, the UE may expect dynamic scheduling through DCI.

**2) If the UE does not receive the WUS, SPS will not be activated at the start of the DRX.**

The UE shall perform PDCCH monitoring at the start of DRX Active Time. It does not expect to receive PDSCH through SPS.

If the BS has transmitted PDSCH through SPS, the UE may not perform PDSCH reception through SPS, and thus may not receive subsequent HARQ-ACK. Assuming a miss detection by the UE, the BS may reactivate the pending SPS for the UE or indicate dynamic scheduling. In this case, the BS may experience latency between transmission of PDSCH through SPS and reception of the corresponding HARQ-ACK.

Therefore, in the case where there is previously pending SPS and the UE does not receive the WUS, it may be more advantageous in terms of latency to automatically activate the pending SPS at the next DRX Active Time.

With the proposed operation, the UE may receive PDSCH only for SPS occasions that overlap with the DRX Active Time for reception of XR packets.

### [Method 1-4] Types of SPS indicated by WUS

As an improvement of the method proposed above, as the SPS is activated through a WUS, and the DRX Active Time starts, PDSCH may be expected to be received through SPS resources. This operation may be similar to Type 1 configured scheduling (CS) in UL transmissions. In Type 1 CS, configuration related to UL scheduling is indicated through RRC, and then the UE performs UL transmission according to a predetermined periodicity. In the proposed method, the indication of SPS activation through the WUS may be seen as reconfiguring the scheduling information about the previously pending SPS, which may be interpreted similarly to performing configuration related to UL scheduling through RRC in Type 1 CS. Therefore, the SPS proposed in Method 1-1 may be referred to as Type 1 SPS in the present disclosure.

After SPS is configured through RRC, as in Type 2 CS for UL, it may be activated through DCI. In other words, the SPS that is activated through DCI including a CRC scrambled with CS-RNTI when the scheduling information about previously pending SPS is reconfigured through the WUS may be referred to as type 2 SPS. This type of SPS may be referred to as Type 2 SPS. In this case, the DCI including the CRC scrambled with CS-RNTI may not contain scheduling information.

While it has been described above that the pending state similar to SPS release is defined and the SPS is activated through the WUS, the operation may also be interpreted as SPS re-configuration indicated through the WUS.

When the configured and pending SPS indicated through the WUS is Type 2 SPS, the UE will start the DRX Active Time and receive configuration of SPS resources, but will not expect PDSCH reception through those resources. It may receive DCI including a CRC scrambled with CS-RNTI during the DRX Active Time, and may expect PDSCH reception through the SPS resources after type 2 SPS is activated.

To this end, a new format for of DCI including a CRC scrambled with CS-RNTI may be considered. In addition to the scheduling DCI in the current standard, non-scheduling DCI may be considered. For example, it may be DCI format x_1 (case 2 SCell dormancy indication) that does not contain scheduling information. In this case, PDCCH monitoring adaptation may be indicated simultaneously with SPS activation. Alternatively, it may be DCI format 2_6 monitored within the DRX Active Time. In this case, an SCell dormancy indication field may be used for validation.

Type 2 SPS may have the advantage over Type 1 SPS, as it may include validation. However, it may have the drawback in that PDSCH cannot be received immediately after starting the DRX Active Time. It has an advantage that additional indications may be provided through DCI. For example, multiple SPSs may be indicated (reconfigured) through a WUS, and only SPSs with some indexes may be activated through DCI. To this end, a field may be configured with a bitmap for the SPS index.

### [Method 1-5] PDCCH skipping operation after completing XR packet reception

After completing the reception of XR packets through SPS resources, PDCCH skipping may be indicated. It may be included in the SPS activation DCI. The SPS activation DCI may be DCI format 2_6 in Type 1 SPS or DCI containing a CRC scrambled with CS-RNTI in Type 2 SPS.

The time difference (application delay) between the indication of the PDCCH skipping and its actual application may be indicated as non-zero, as in the current standard, and the PDCCH skipping may be defined as being performed after a certain point in time. The application delay of the new operation may be determined based on the XR packet size. This may be advantageous when higher layer information, such as the last TB of the XR packet or jitter information, is available. If the higher layer information is unavailable, the delay may be expected based on previously received packets and UL/pose information. Alternatively, it may be set to a few slots (or symbols) after the HARQ-ACK transmission for the last TB of the XR packet.

PDCCH skipping may be indicated along with SPS pending (or release) indication.

### [Method 2] Receiving SPS activation DCI while starting DRX Active Time

The UE may receive SPS activation DCI in the same manner as in the current NR standard, and may expect PDSCH reception using SPS resources. Alternatively, the proposed Method 2 may be applied to Type 2 SPS proposed above. For the operations in Method 2, the operations proposed in Method 1 may be applied.

The SPS activation DCI may include new indications. It may use a 1-bit field to indicate the association with the current DRX. For example, the association with the current DRX may indicate that the SPS is for receiving XR packets. Also, the SPS activation DCI may include a skipping indication related to SPS. For example, it may an indication that PDCCH monitoring is not performed for a defined unit of time or unit of SPS resource. In this case, the UE may save power by not monitoring PDCCH while receiving XR packets through SPS resources. Alternatively, it may be indicated through PDCCH skipping that the PDSCH reception through SPS resources should be delayed. For example, the SPS activation DCI indicates PDCCH skipping, and thus the UE may perform an operation starting from the time the DCI is received. Even when there is SPS within the indicated skipping duration, PDSCH reception may be skipped in the SPS.

PDCCH skipping may include new indications in addition to slot-based indications. For example, a pattern may be indicated to adjust both PDCCH and SPS PDSCH receptions. The pattern may be configured to indicate skipping reception of both PDCCH and SPS PDSCH or only PDCCH during a specific period. Alternatively, the pattern may indicate PDCCH monitoring only around the time the SPS PDSCH is received (e.g., N slots before and after the reception slot). The pattern may be configured to indicate that PDCCH should be skipped except near the slot in which SPS PDSCH is configured.

The PDCCH skipping operation proposed in Method 2 may be included in the WUS in Method 1 to be performed similarly.

After SPS activation, it may be necessary to set/indicate when to begin receiving PDSCH among the SPS resources. This may be valid in cases where the XR packet is delayed due to jitter. The UE may not receive PDSCH immediately after the SPS activation, but after a certain period (or a certain number of PDSCH resources). To indicate this reception, a field may be added in the DCI. Alternatively, a portion of the field used for validation may be used for this purpose. For example, a up to 2 bits may be used to indicate how many slots later or from which SPS resource the PDSCH should be received.

Such operations may save power by skipping PDCCH monitoring for a certain period of time after receiving the XR packet on the SPS PDSCH. This may be particularly effective when it can be assumed that transmission of the XR packet occupies most of the current BWP of the UE.

An operation is proposed to address the latency issues related to XR packet reception that may arise when a UE with DRX operation configured performs an operation aimed at power saving while supporting XR service. Through this operation, the UE may smoothly receive XR packets without delay while performing an operation to reduce power consumption.

Also, proposed herein are indicating/configuring a PDCCH monitoring pattern that may reduce power consumption while supporting XR service of the UE for which DRX operation is configured or not, and operation methods according to the pattern. The proposals may allow DRX operations for XR packet reception to be performed while unnecessary power consumption is reduced by adjusting PDCCH monitoring.

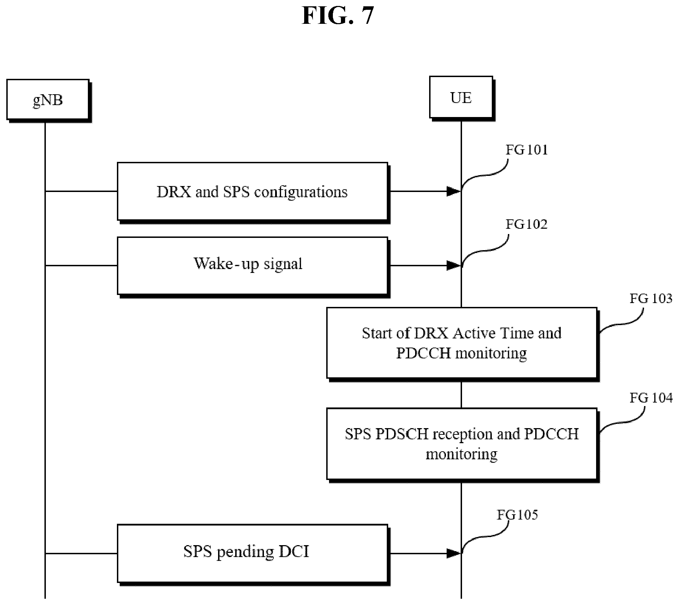

FIG. 7 illustrates the process of performing the Type 1 SPS operation proposed in Method 1 by a UE for which DRX operation and SPS are configured.

Referring to FIG. 7, the UE may receive DRX and SPS configuration from the BS (FG101). The configuration may include DRX index, periodicity, and SPS index to support XR service. The BS may transmit a wake-up signal to enable the UE to start DRX Active Time (FG102). This may be SPS activation through the WUS. The UE starts the DRX Active Time (drx-onDurationTimer) and performs PDCCH monitoring (FG103). This may be a result of setting the higher layer parameter ps-WakeUp={true} when the has not received the wake-up signal. The UE receives PDSCH through SPS and performs PDCCH monitoring (FG104). The UE may perform the indicated PDCCH skipping operation. After the XR packet transmission is completed, the BS transmits the SPS pending DCI (FG105). The SPS pending DCI may not be transmitted in the case of automatic pending after specific conditions as proposed in Method 1-2. Accordingly, the UE may receive the scheduled XR packet through SPS resources while reducing power consumption by reducing unnecessary PDCCH monitoring.

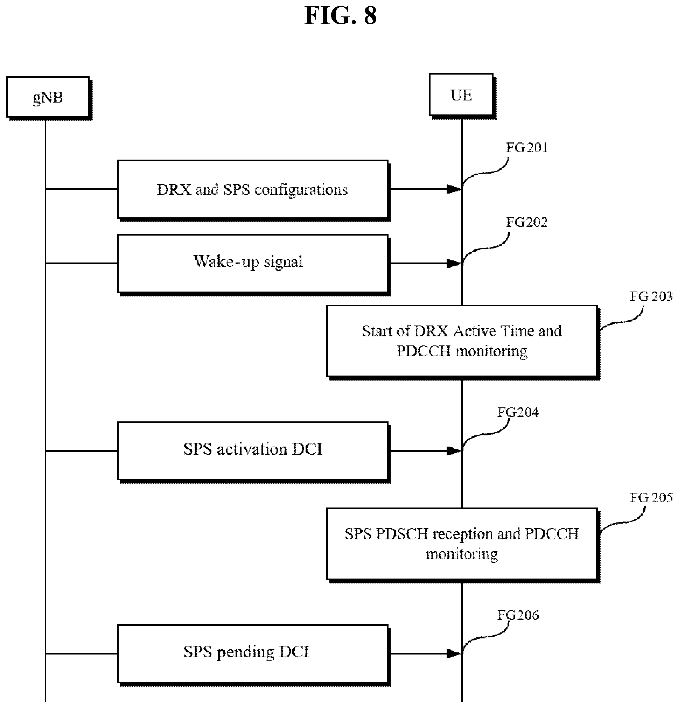

FIG. 8 illustrates the process of performing Type 2 SPS proposed in Method 1-4 or the operation of Method 2 by a UE for which DRX operation and SPS are configured.

The UE may receive DRX and SPS configuration from the BS (FG201). The configuration may include DRX index, periodicity, and SPS index to support XR services. The BS may transmit a wake-up signal to enable the UE to start DRX Active Time (FG202). When the UE supports Type 2 SPS, the wake-up signal may include re-configuration of pending SPS. The UE starts the DRX Active Time (drx-onDurationTimer) and performs PDCCH monitoring (FG203). This may be a result of setting the higher layer parameter ps-WakeUp={true} when the has not received the wake-up signal. The BS transmits SPS activation DCI (FG204), which may be intended to transmit an XR packet using the configured SPS resources. The UE receives PDSCH through SPS and performs PDCCH monitoring (FG205). The UE may perform the indicated PDCCH skipping operation. After the XR packet transmission is completed, the BS transmits the SPS pending DCI (FG206). The SPS pending DCI may not be transmitted in the case of automatic pending after specific conditions as proposed in Method 1-2. Accordingly, the UE may receive the scheduled XR packet through SPS resources while reducing power consumption by reducing unnecessary PDCCH monitoring.

Unless otherwise noted, the proposed methods may be applied to any DRX structure or SPS operation monitoring of the UE, as long as the principles of the disclosure are not violated, even without further explanation.

The operation of the UE receiving XR packets through SPS configured within the DRX Active Time may be supported. The support may allow the periodic transmission of XR packets to be received through the SPS, which is periodic reception scheduling, thereby reducing unnecessary PDCCH monitoring and saving power. Furthermore, the proposed new state for SPS resources may help prevent unnecessary waste of resources.

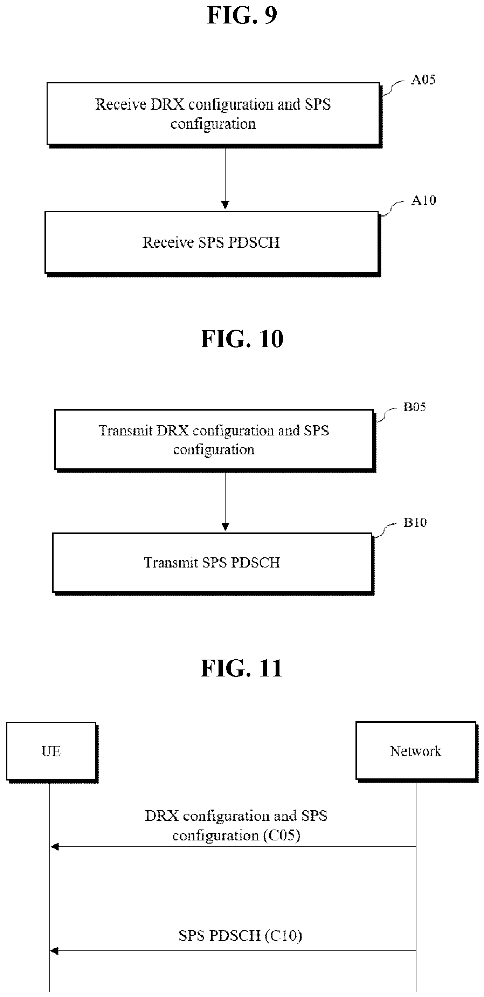

FIG. 9 is a diagram illustrating a flow of a method of receiving a signal by a UE according to one embodiment.

Referring to FIG. 9, the UE may receive a discontinuous reception (DRX) configuration and a semi-persistent scheduling (SPS) configuration (A05).

The UE may receive an SPS physical downlink shared channel (PDSCH) based on the SPS configuration (A10).

The SPS PDSCH may include eXtended Reality (XR) traffic.

The SPS configuration may switch to an inactive pending state in the DRX off-duration of each DRX cycle based on the DRX configuration.

Based on completion of the reception of the XR traffic or transmission of hybrid automatic repeat request (HARQ)-acknowledgement (ACK) for the XR traffic, the SPS configuration may switch to the inactive pending state.

Based on that the SPS configuration is for receiving the XR traffic, the SPS configuration may switch to the inactive pending state in each DRX off-duration.

Based on that downlink control information (DCI) including information related to the SPS configuration is detected after the SPS PDSCH, the SPS configuration may switch to the inactive pending state.

The UE may maintain the SPS configuration switched to the inactive pending state as scheduling information that can be re-activated.

The SPS configuration may be activated or re-activated based on a wake-up signal (WUS).

The SPS configuration switched to the inactive pending state may be re-activated in the next DRX on-duration.

The UE may monitor downlink control information (DCI) for activation or re-activation of the SPS configuration in the DRX on-duration based on the DRX configuration.

FIG. 10 is a diagram illustrating a flow of a method of transmitting a signal by a BS according to one embodiment.

The BS may transmit a discontinuous reception (DRX) configuration and a semi-persistent scheduling (SPS) configuration (B05).

The BS may transmit an SPS physical downlink shared channel (PDSCH) based on the SPS configuration (B10).

The SPS PDSCH may include eXtended Reality (XR) traffic.

The SPS configuration may switch to an inactive pending state in the DRX off-duration of each DRX cycle based on the DRX configuration.

Based on transmission of the XR traffic being completed or hybrid automatic repeat request (HARQ)-acknowledgement (ACK) for the XR traffic being received, the SPS configuration may switch to the inactive pending state.

Based on the SPS configuration is for transmitting the XR traffic, the SPS configuration may switch to the inactive pending state in each DRX off-duration.

Based on that downlink control information (DCI) including information related to the SPS configuration is transmitted after the SPS PDSCH, the SPS configuration may switch to the inactive pending state.

The BS may maintain the SPS configuration switched to the inactive pending state as scheduling information that can be re-activated.

The SPS configuration may be activated or re-activated based on a wake-up signal (WUS).

The SPS configuration switched to the inactive pending state may be re-activated in the next DRX on-duration.

The BS may transmit downlink control information (DCI) for activation or re-activation of the SPS configuration in the DRX on-duration based on the DRX configuration.

FIG. 11 is a diagram illustrating a flow of a method of transmitting and receiving signals over a network according to one embodiment.

Referring to Fig. 11, the network may transmit a DRX configuration and an SPS configuration, and the UE may receive the same (C05).

The network may transmit an SPS PDSCH based on the SPS configuration, and the UE may receive the same (B10).

The SPS PDSCH may include XR traffic.

The SPS configuration may switch to an inactive pending state in the DRX off-duration of each DRX cycle based on the DRX configuration.

Based on transmission of the XR traffic being completed or hybrid automatic repeat request (HARQ)-acknowledgement (ACK) for the XR traffic being received, the SPS configuration may switch to the inactive pending state.

Based on that the SPS configuration is for transmitting the XR traffic, the SPS configuration may switch to the inactive pending state in each DRX off-duration.

Based on that DCI including information related to the SPS configuration is transmitted after the SPS PDSCH, the SPS configuration may switch to the inactive pending state.

The network/UE may maintain the SPS configuration switched to the inactive pending state as scheduling information that can be re-activated.

The SPS configuration may be activated or re-activated based on a wake-up signal (WUS).

The SPS configuration switched to the inactive pending state may be re-activated in the next DRX on-duration.

The network may transmit, to the UE, downlink control information (DCI) for activation or re-activation of the SPS configuration in the DRX on-duration based on the DRX configuration.

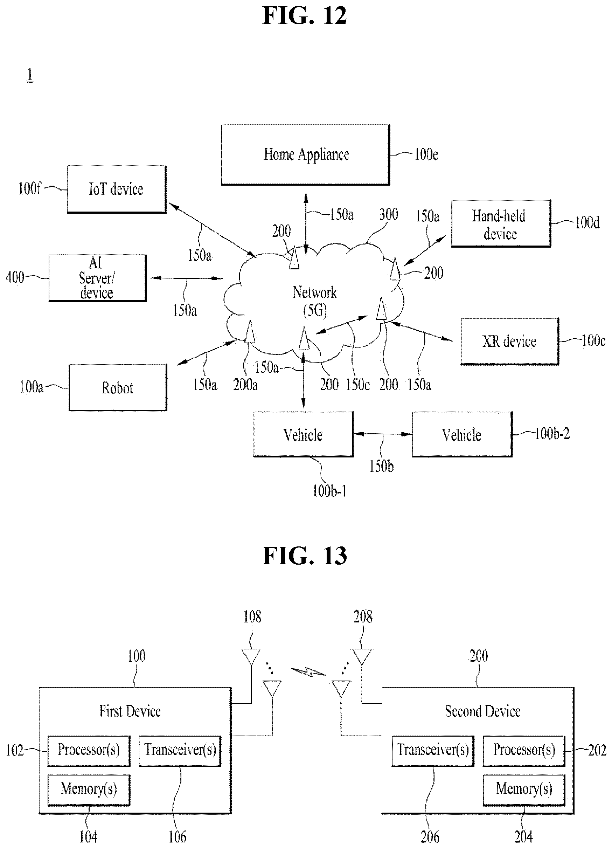

FIG. 12 illustrates a communication system 1 applied to the present disclosure.

Referring to FIG. 12, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

The above-described embodiments are combinations of elements and features of the present disclosure in specific forms. The elements or features may be considered selective unless mentioned otherwise. Each element or feature may be implemented without being combined with other elements or features. Further, the embodiments of the present disclosure may be configured by combining some elements and/or some features. Operation orders described in the embodiments of the present disclosure may be rearranged. Some constructions or features of any one embodiment may be included in another embodiment or may be replaced with corresponding constructions or features of another embodiment. It is obvious that claims that are not explicitly cited in the appended claims may be presented in combination as an embodiment of the present disclosure or included as a new claim by subsequent amendment after the application is filed.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Applicability]

The present disclosure is applicable to UEs, BSs, or other apparatuses in a wireless mobile communication system.

## Claims

1. A method of receiving a signal by a user equipment (UE) in a wireless communication system, the method comprising:
receiving a discontinuous reception (DRX) configuration and a semi-persistent scheduling (SPS) configuration; and
receiving an SPS physical downlink shared channel (PDSCH) based on the SPS configuration,
wherein the SPS PDSCH comprises eXtended Reality (XR) traffic, and
wherein the SPS configuration switches to an inactive pending state in a DRX off-duration of each DRX cycle based on the DRX configuration.

2. The method of claim 1, wherein the SPS configuration switches to the inactive pending state based on completion of the reception of the XR traffic or transmission of hybrid automatic repeat request (HARQ)-acknowledgement (ACK) for the XR traffic.

3. The method of claim 1, wherein, based on that the SPS configuration is for receiving the XR traffic, the SPS configuration switches to the inactive pending state during each DRX off-duration.

4. The method of claim 1, wherein, based on that downlink control information (DCI) including information related to the SPS configuration is detected after the SPS PDSCH, the SPS configuration switches to the inactive pending state.

5. The method of claim 1, wherein the UE maintains the SPS configuration switched to the inactive pending state as scheduling information that can be re-activated.

6. The method of claim 1, wherein the SPS configuration is activated or re-activated based on a wake-up signal (WUS).

7. The method of claim 1, wherein the SPS configuration switched to the inactive pending state is re-activated in a next DRX on-duration.

8. The method of claim 1, further comprising:
monitoring downlink control information (DCI) for activation or re-activation of the SPS configuration in the DRX on-duration based on the DRX configuration.

9. A computer-readable recording medium storing instructions for performing the method of claim 1.

10. A device for wireless communication, the device comprising:
a memory configured to store instructions; and
a processor configured to perform operations by executing the instructions,
wherein the operations of the processor comprise:
receiving a discontinuous reception (DRX) configuration and a semi-persistent scheduling (SPS) configuration; and
receiving an SPS physical downlink shared channel (PDSCH) based on the SPS configuration,
wherein the SPS PDSCH comprises eXtended Reality (XR) traffic, and
wherein the SPS configuration switches to an inactive pending state in a DRX off-duration of each DRX cycle based on the DRX configuration.

11. The device of claim 10, further comprising a transceiver configured to transmit or receive a signal under control of the processor,
wherein the device is a user equipment (UE) operating in a wireless communication system.

12. The device of claim 10, wherein the device is an application specific processor (ASIC) or digital signal processing device configured to control a user equipment (UE) operating in a wireless communication system.

13. A method of transmitting a signal by a base station in a wireless communication system, the method comprising:
transmitting a discontinuous reception (DRX) configuration and a semi-persistent scheduling (SPS) configuration; and
transmitting an SPS physical downlink shared channel (PDSCH) based on the SPS configuration,
wherein the SPS PDSCH comprises eXtended Reality (XR) traffic, and
wherein the SPS configuration switches to an inactive pending state in a DRX off-duration of each DRX cycle based on the DRX configuration.

14. A base station for wireless communication, the base station comprising:
a memory configured to store instructions; and
a processor configured to perform operations by executing the instructions,
wherein the operations of the processor comprise:
transmitting a discontinuous reception (DRX) configuration and a semi-persistent scheduling (SPS) configuration; and
transmitting an SPS physical downlink shared channel (PDSCH) based on the SPS configuration,
wherein the SPS PDSCH comprises eXtended Reality (XR) traffic, and
wherein the SPS configuration switches to an inactive pending state in a DRX off-duration of each DRX cycle based on the DRX configuration.
